# EUROPEAN PATENT APPLICATION

(11) **EP 4 651 610 A1**
(43) Date of publication of application: **19.11.2025**
(21) Application number: 24741611.8
(22) Date of filing: 02.01.2024
(51) Int. Cl.: H04W 74/00, H04B 7/0452, H04L 27/26, H04W 84/12

(54) **METHOD AND DEVICE FOR TRANSMITTING AND RECEIVING TRIGGER FRAME-BASED PPDU IN WIRELESS LAN SYSTEM**

(30) Priority: 12.01.2023 KR 20230004869
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR)
(74) Representative: Plasseraud IP
(86) International application number: PCT/KR2024/000010
(87) International publication number: WO 2024/150989

(57) **Abstract**

An operation method and device in a wireless LAN system are disclosed. A method performed by a first STA in a wireless LAN system according to an embodiment of the present disclosure may comprise the steps of: receiving a trigger frame including a UHR variant common information field from a second STA; and on the basis of the trigger frame, transmitting at least one TB PPDU to the second STA, wherein the UHR variant common information field includes an HE/EHT P160 subfield, an EHT variant special user information field flag subfield, and a UHR variant special user information field flag subfield, and on the basis that a value of the HE/EHT P160 subfield is configured to be 0, a value of the EHT variant special user information field flag subfield is configured to be 1, and a value of the UHR variant special user information field flag subfield is configured to be 0, a format of the at least one TB PPDU is an UHR TB PPDU.

## Description

### [TECHNICAL FIELD]

The present disclosure relates to a communication operation in a wireless local area network (WLAN) system, and more specifically, to a method and device for transmitting and receiving a physical protocol data unit (PPDU) based on a trigger frame.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for transmitting and receiving a trigger frame-based PPDU in a wireless LAN system.

The technical problem of the present disclosure is to provide a method and device for performing a bandwidth indication for a TB PPDU based on a trigger frame.

The technical objects to be achieved by the present disclosure are not limited to the above-described technical objects, and other technical objects which are not described herein will be clearly understood by those skilled in the pertinent art from the following description.

### [Technical Solution]

According to one aspect of the present disclosure, a method performed by a first station (STA) in a wireless LAN system may include receiving a trigger frame including a UHR (ultra-high reliability) variant common information field from a second STA; and transmitting at least one trigger-based (TB) physical layer protocol data unit (PPDU) to the second STA based on the trigger frame, and the UHR variant common information field may include a HE(high efficiency)/EHT(extremely high throughput) P(primary)160 subfield, an EHT variant special user information field flag subfield and a UHR variant special user information field flag subfield, and based on the HE/EHT P160 subfield value being set to 0, the EHT variant special user information field flag subfield value being set to 1 and the UHR variant special user information field flag subfield value being set to 0, a format of the at least one TB PPDU may be a UHR TB PPDU.

According to one aspect of the present disclosure, a method performed by a second station (STA) in a wireless LAN system may include transmitting a trigger frame including a UHR (ultra-high reliability) variant common information field to a first STA; and receiving at least one trigger-based (TB) physical layer protocol data unit (PPDU) from the first STA based on the trigger frame, and the UHR variant common information field may include a HE(high efficiency)/EHT(extremely high throughput) P(primary)160 subfield, an EHT variant special user information field flag subfield and a UHR variant special user information field flag subfield, and based on the HE/EHT P160 subfield value being set to 0, the EHT variant special user information field flag subfield value being set to 1 and the UHR variant special user information field flag subfield value being set to 0, a format of the at least one TB PPDU may be a UHR TB PPDU.

### [Technical Effects]

According to various embodiments of the present disclosure, a method and device for transmitting and receiving a PPDU based on a trigger frame in a wireless LAN system can be provided.

According to the present disclosure, a method and device for performing bandwidth instruction for a TB PPDU based on a trigger frame may be provided.

According to the present disclosure, since a new version of PPDU and/or merged PPDU transmission and reception based on a trigger frame is supported, there is an effect that latency is reduced and throughput and efficiency can be improved.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 illustrates an exemplary format of a trigger frame to which the present disclosure may be applied.
FIG. 9 illustrates an A-PPDU structure to which the present disclosure may be applied.
FIG. 10 is a flowchart for explaining a method for a first STA to transmit and receive a PPDU according to an embodiment of the present disclosure.
FIG. 11 is a flowchart for explaining a method for a second STA to transmit and receive a PPDU according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.1 1be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

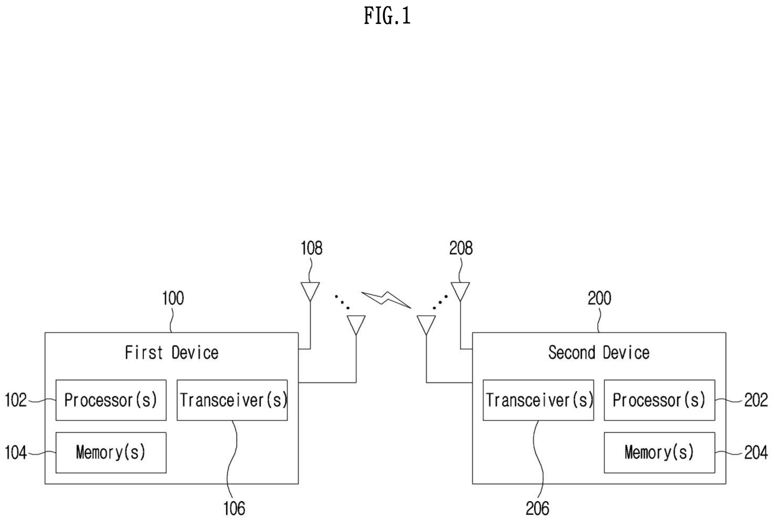

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

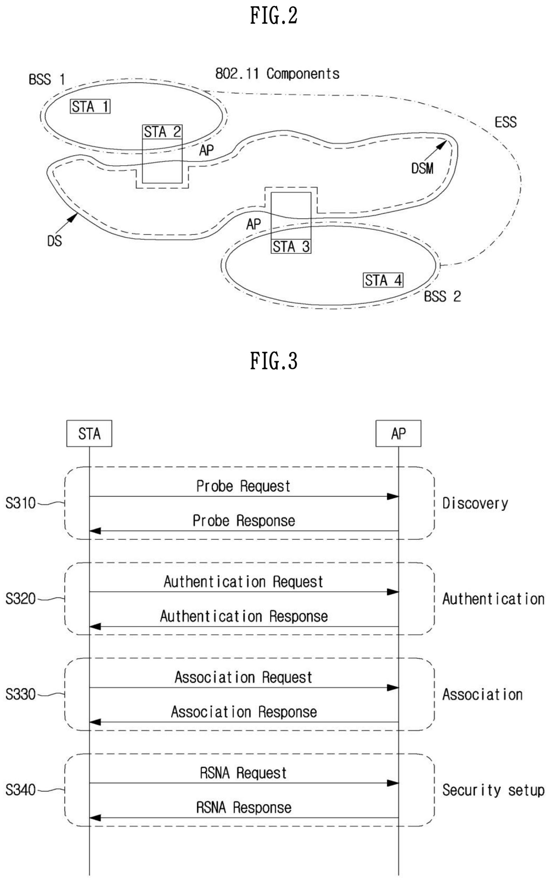

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

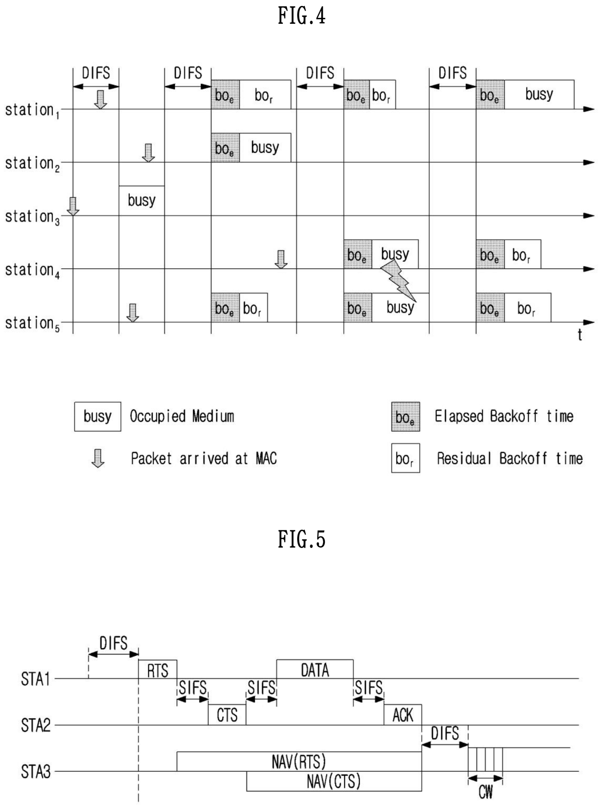

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

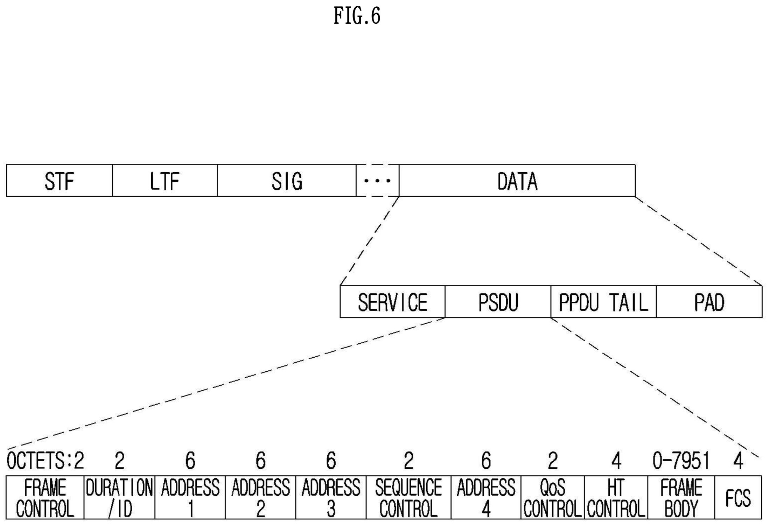

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

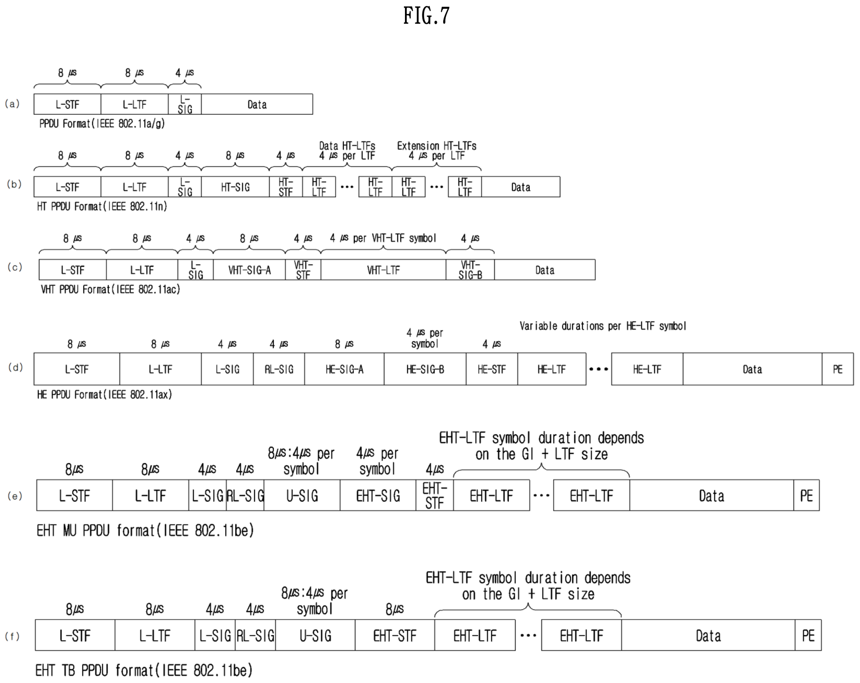

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.1 1ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

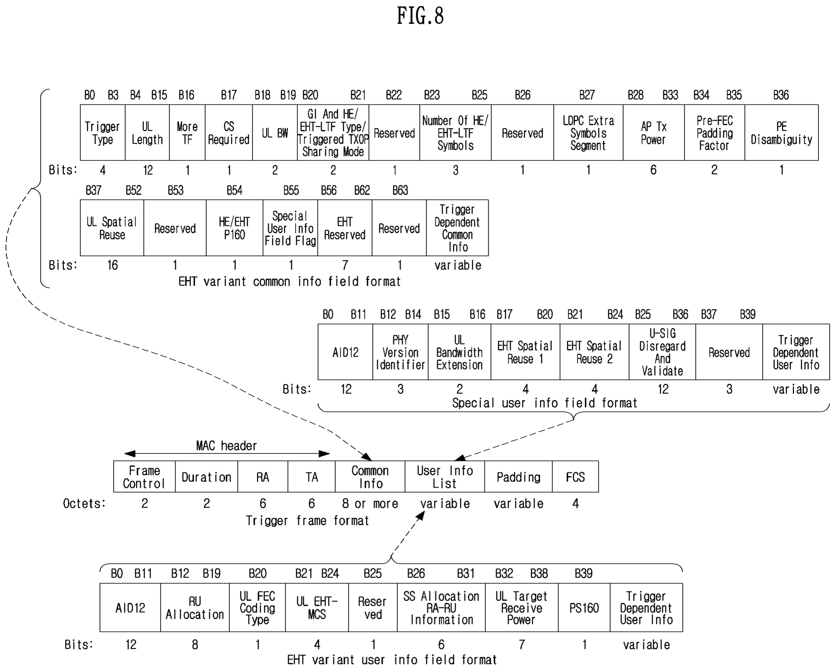

FIG. 8 is a diagram illustrating an example format of a trigger frame to which the present disclosure may be applied.

The trigger frame may allocate resources for transmission of one or more TB PPDUs and request transmission of TB PPDUs. The trigger frame may also include other information required by the STA, which transmits the TB PPDU in response. The trigger frame may include common information and user information list fields in the frame body.

The common info field is information commonly applied to the transmission of one or more TB PPDUs requested by a trigger frame, such as trigger type, UL length, presence or absence of a subsequent trigger frame (e.g., More TF), CS (channel sensing) request, UL BW (bandwidth), HE/EHT P160, special user info field flag, etc.

The 4-bit trigger type subfield may have values from 0 to 15. Among them, the values 0, 1, 2, 3, 4, 5, 6, and 7 of the trigger type subfield are defined to correspond to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and the values 8 to 15 are defined as reserved.

Among the common information, the trigger dependent common info subfield may include information that is optionally included based on the trigger type.

A special user info field may be included in the trigger frame. The special user info field does not include user specific information, but includes extended common information that is not provided in the common info field.

The user info list includes zero or more user info fields. FIG. 8 illustrates an example of an EHT variant user info field format.

The AID 12 subfield basically indicates that it is a user info field for the STA with the corresponding AID. In addition, if the AID 12 field has a specific predetermined value, it may be used for other purposes, such as allocating a random access (RA)-RU or being configured as a special user info field. A special user info field is a user info field that does not include user-specific information but includes extended common information not provided in the common info field. For example, the special user info field may be identified by an AID12 value of 2007, and the special user info field flag subfield within the common info field may indicate whether the special user info field is included.

The RU allocation subfield may indicate the size and location of RU/MRU. For this purpose, the RU allocation subfield may be interpreted together with the PS160 (primary/secondary 160MHz) subfield of the user information field, the UL BW subfield of the common information field, etc.

Trigger frame for non-legacy PPDU and/or aggregated PPDU

In a wireless LAN system, TB PPDU transmission corresponding to UL multi-user (MU) transmission may be possible through a trigger frame.

In this regard, the present disclosure proposes a trigger frame for TB PPDU transmission and reception in a next-generation wireless LAN system (e.g., Next 11 be, UHR, etc.) based on the trigger frame described above (e.g., related to FIG. 14).

Additionally, the present disclosure proposes a trigger frame that considers TB A-PPDU (aggregated-PPDU) in which PPDUs of different wireless LAN versions can be transmitted simultaneously to improve efficiency and throughput.

That is, the trigger frame proposed in the present disclosure may be used to trigger/solicit transmission of a TB PPDU in a next-generation wireless LAN system. Additionally or alternatively, the trigger frame proposed in the present disclosure may be used to trigger/solicit transmission of a TB A-PPDU.

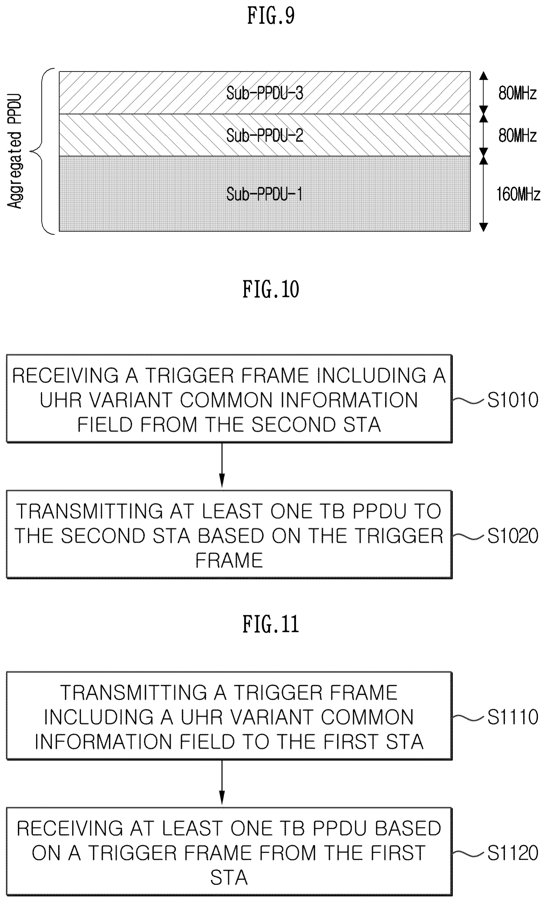

FIG. 9 illustrates an A-PPDU structure to which the present disclosure may be applied.

Referring to FIG. 9, an A-PPDU may be composed of a first sub-PPDU, a second sub-PPDU, and a third sub-PPDU.

For example, the first sub-PPDU may support a 160 MHz bandwidth, the second sub-PPDU may support an 80 MHz bandwidth, and the third sub-PPDU may support an 80 MHz bandwidth.

In this regard, each sub-PPDU may be a PPDU for a different wireless LAN version. For example, each sub-PPDU may correspond to a HE PPDU, an EHT PPDU, or a next-generation PPDU (e.g., next version PPDU, UHR PPDU, etc.).

In the present disclosure, an enhanced trigger frame is proposed that improves the existing trigger frame (e.g., related to FIG. 8) to trigger/request TB PPDU and various TB A-PPDUs in a next-generation wireless LAN system.

The enhanced trigger frame may correspond to a next version trigger frame considered in a next generation wireless LAN system.

For clarity of explanation, the enhanced trigger frame proposed in the present disclosure is referred to as a non-legacy trigger frame. For example, the legacy trigger frame may include a trigger frame that triggers/requests a PPDU of a HE version and a trigger frame that triggers/requests a PPDU of an EHT version (e.g., FIG. 8).

In the description in this disclosure, "non-legacy" may mean a subsequent version after a previous version/variant.

As a specific example, "non-legacy" in the present disclosure may be applied by replacing it with a version/variant representation after the EHT version/variant (e.g., UHR).

A non-legacy trigger frame may include a non-legacy variant common info field, a non-legacy variant special user info field, and a non-legacy user info field.

Here, the non-legacy variant common information field, the non-legacy variant special user information field, and the non-legacy user information field may mean the variant common information field, the variant special user information field, and the user information field for the next version (e.g., next 11 be, UHR, etc.) in the next generation wireless LAN system, respectively.

If a non-legacy trigger frame triggers an A-PPDU, it may include a (legacy) special user information field, a legacy variant user information field (e.g., a HE variant user information field, an EHT variant user information field).

In the present disclosure, a trigger frame (hereinafter, Example 1) for a case where a wireless LAN system is defined to have a bandwidth of only 320 MHz, and a trigger frame (hereinafter, Example 2) for a case where a wireless LAN system is defined to have a bandwidth of 480 MHz/640 MHz are described.

### Embodiment 1

This embodiment is for non-legacy trigger frames defined up to 320 MHz bandwidth/channel width.

### Non-Legacy (e.g. UHR) Variant Common Information Field

A non-legacy variant common information field can be defined based on a legacy variant common information field (e.g., the EHT variant common information field in FIG. 8).

The non-legacy variant common information field can be used to indicate information of a non-legacy (i.e., next version) TB PPDU. Additionally, when transmitting an A-PPDU, i.e., when the A-PPDU transmission is triggered/requested by the corresponding non-legacy trigger frame, the non-legacy variant common information field can also indicate information of a legacy TB PPDU (e.g., HE TB PPDU / EHT TB PPDU).

Each subfield of the non-legacy variant common information field may be as follows.

The Trigger Type subfield may be defined as in Fig. 8, and can be set to a value of 0 (i.e., Basic Trigger type) for triggers such as TB PPDU.

Additionally, the UL length subfield, the More TF subfield, the CS required subfield, and the UL BW subfield can be defined as in FIG. 8.

Additionally, the GI And HE/EHT-LTF Type/Triggered TXOP sharing Mode subfield may include a non-legacy (i.e., next version) LTF Type indication, and the name of the corresponding subfield may be changed accordingly. For example, the corresponding subfield may be changed to GI And HE/EHT/Next version-LTF Type/Triggered TXOP sharing Mode subfield, and a different name may be used. The definition of the value of the corresponding subfield may be as in FIG. 8.

Additionally, the Number Of HE/EHT-LTF Symbols subfield may contain the number of non-legacy (i.e., next version) LTF symbols, and the name of the subfield may be changed accordingly. For example, the subfield may be changed to Number Of HE/EHT/Next version-LTF Symbols subfield, and a different name may be used. The definition of the value of the subfield may be defined as in FIG. 8, or may additionally be indicated up to 16.

Additionally, B23 to B25 and B22 or B26 may be additionally utilized/used with respect to the definition of the corresponding subfield values. In this regard, when a non-legacy trigger frame triggers an A-PPDU, the corresponding subfield may only indicate up to 8, in which case B22 / B26 may be reserved or used for parameter indication defined in the legacy variant common information field (e.g., HE variant common information field).

Additionally, the LDPC Extra Segment subfield, the AP Tx Power subfield, the Pre-FEC Padding Factor subfield, the PE Disambiguity subfield, and the UL Spatial Reuse subfield can be defined as in Fig. 8.

In this regard, the UL Spatial Reuse subfield may be set using the value of the Spatial Reuse 1/2 subfield of the non-legacy variant special user information field when triggering a non-legacy (i.e., next version) TB PPDU. The setting method may be the same as the way of setting using the value of the Spatial Reuse 1/2 subfield of the special user information field when triggering a legacy TB PPDU (e.g., EHT TB PPDU).

Additionally, B53 may be a reserved subfield as in Fig. 8.

In the EHT variant common information field, B54 (e.g., HE/EHT P160 subfield) and B55 (e.g., Special User Information Field Flags subfield) may be used to distinguish which TB PPDU a given trigger frame triggers. The non-legacy variant common information field may also use the bits described above to distinguish which TB PPDU a given trigger frame triggers.

Additionally, a non-legacy P160 subfield, a non-legacy variant special user information field flag subfield, an A-PPDU flag subfield, a non-legacy trigger flag subfield, etc. may be defined using one of bits B56 to B62 of the non-legacy variant common information field. The names of the above-described subfields may be changed to other names.

For example, if the non-legacy P160 subfield value is set to 0, this may mean that a non-legacy TB PPDU is triggered on the primary 160 MHz. If the non-legacy P160 subfield value is set to 1, this may mean that a HE TB PPDU or an EHT TB PPDU is triggered on the primary 160 MHz.

For example, if the non-legacy variant special user information field flag subfield value is set to 0, this may mean that a non-legacy variant special user information field conveying additional information for a non-legacy TB PPDU is present. If the non-legacy variant special user information field flag subfield value is set to 1, this may mean that the non-legacy variant special user information field is not present.

As another example, if the A-PPDU Flag subfield value is set to 0, this may indicate that the TB PPDU triggered/requested by the corresponding trigger frame is an A-PPDU (or, it may indicate that the TB PPDU is an A-PPDU including a non-legacy UHR PPDU). If the A-PPDU Flag subfield value is set to 1, this may indicate that the TB PPDU triggered/requested by the corresponding trigger frame is not an A-PPDU (or, it may indicate that the TB PPDU is not an A-PPDU not including a non-legacy PPDU).

As another example, if the non-legacy trigger flag subfield value is set to 0, it may indicate that the TB PPDU triggered/requested by the corresponding trigger frame is a non-legacy TB PPDU (or, that an A-PPDU is triggered and a non-legacy TB PPDU is included in the A-PPDU). If the non-legacy trigger flag subfield value is set to 1, it may indicate that the TB PPDU triggered/requested by the corresponding trigger frame is not a non-legacy TB PPDU.

With respect to the setting/definition of the above-mentioned subfields, as an example of another reserved bit, one of the bits B22, B26, and B53 may be used. However, considering the A-PPDU case, it may be desirable not to use B22, B26, and B53 in terms of an information transmission error that may occur to a legacy STA (e.g., HE STA).

B56 to B62 in the non-legacy variant common information field may be changed to non-legacy (i.e., next version) reserved subfields. Alternatively, some bits of B56 to B62 in the variant common information field may be defined as specific subfields, and the remaining bits may be changed to non-legacy (i.e., UHR, etc.) reserved subfields.

Additionally, B63 within the non-legacy variant common information field may be a reserved field.

In the following embodiment, a method for distinguishing various TB PPDUs is specifically proposed.

**[Table 1]**

| Common Info field B54 | Common Info field B55 | User Info field B39 | Presence of Special User Info field | User Info field variant | TB PPDU type |
|---|---|---|---|---|---|
| 1 | 1 | 0 | No | HE variant | HE |
| 0 | 0 | 0 | Yes | EHT variant | EHT |
| 0 | 0 | 1 | Yes | EHT variant | EHT |
| 1 | 0 | 1 | Yes | EHT variant | EHT |
| 1 | 0 | 0 | Yes | HE variant | HE |

With respect to Table 1, the last row in the table enables a non-AP EHT STA to transmit a HE TB PPDU on primary 160 MHz in response to a trigger frame including a special user information field. Referring to Table 1, various TB PPDUs can be triggered/requested via the trigger frame defined in FIG. 8.

For example, HE TB PPDU, EHT TB PPDU, and P160 HE TB PPDU + S160 EHT TB PPDU may be triggered/requested through the trigger frame. Here, P160 HE TB PPDU and S160 EHT TB PPDU represent HE TB PPDU in primary 160 MHz bandwidth and EHT TB PPDU in secondary 160 MHz bandwidth, respectively. In this regard, the bandwidth actually used in P160 and S160 may be less than or equal to 160 MHz. Additionally, PPDUs transmitted using B54, B55, and B39 of the user information field may be distinguished.

The non-legacy trigger frame proposed in the present disclosure (i.e., trigger frame in the next version) may be defined/configured to trigger/request not only the HE TB PPDU, EHT TB PPDU, and P160 HE TB PPDU + S160 EHT TB PPDU in the above-mentioned examples, but also additionally the non-legacy (i.e., next version) TB PPDU, P160 HE TB PPDU + S160 non-legacy TB PPDU, and P160 EHT TB PPDU + S160 non-legacy TB PPDU. In this regard, the bandwidth actually used in P160 and S160 may be less than or equal to 160 MHz.

In the present disclosure, when triggering TB PPDU/TB A-PPDU based on a non-legacy trigger frame, a bit setting method for each TB PPDU configuration (a method according to Embodiments 1-1 to 1-4) is proposed. In Embodiments 1-1 to 1-4, B54 and B55 may mean the 55th bit and the 56th bit of the common information field of the non-legacy/legacy trigger frame.

### Embodiment 1-1

Embodiment 1-1 relates to a method of triggering various types of TB PPDUs via B54, B55 and non-legacy (e.g., UHR) variant special user information field flag subfields.

First, to trigger/indicate HE TB PPDU, B54 may be set to 1, B55 may be set to 1, and the non-legacy variant special user information field flag subfield may be set to 1.

Next, to trigger/indicate EHT TB PPDU, B54 may be set to 0 value, B55 may be set to 0 value, and the non-legacy variant special user information field flag subfield may be set to 1 value.

Next, to trigger/indicate P160 HE TB PPDU + S160 EHT TB PPDU, B54 may be set to a value of 1, B55 may be set to a value of 0, and the non-legacy variant special user information field flag subfield may be set to a value of 1. Additionally, variants of the user information field may be distinguished using B39 of the user information field. For example, when B39 is set to a value of 0, it means an HE variant, and when B39 is set to a value of 1, it means an EHT variant.

With respect to the aforementioned TB PPDU configuration, when decoding the trigger frame, (any) non-legacy (e.g., UHR) STA may interpret it as a legacy trigger frame (e.g., the trigger frame in FIG. 8). In this case, the aforementioned TB PPDU configuration may not be a problem since it is not related to a non-legacy TB PPDU.

Next, to trigger/indicate a non-legacy TB PPDU, B54 may be set to 0, B55 may be set to 1, and the non-legacy variant special user information field flag subfield may be set to 0.

This setting is not used in legacy trigger frames. Therefore, when decoding such trigger frame, (any) non-legacy STA may interpret it as a non-legacy trigger frame (i.e., enhanced trigger frame).

This method may be desirable from the perspective of power saving of legacy STAs (e.g., EHT STAs). For example, EHT STAs may stop decoding without interpreting the above-described bit combination because it is a new combination. The above-described bit combination may also be used in the P160 HE TB PPDU + S160 UHR TB PPDU instructions described below.

Additionally or alternatively, to trigger/indicate a non-legacy TB PPDU, B54 may be set to 0 value, B55 may be set to 0 value, and the Non-Legacy Variant Special User Information Field Flags subfield may be set to 0 value.

Here, the non-legacy variant special user information field flag subfield value is set to 0, so that any non-legacy STA (i.e., UHR STA) that decodes the trigger frame can interpret it as an enhanced trigger frame.

The bit combination described above may be used to trigger P160 EHT TB PPDU + S160 UHR TB PPDU. As another example, whether P160 EHT TB PPDU + S160 UHR TB PPDU is triggered can be indicated by the presence or absence of EHT Variant Special User Information field.

This method may be desirable from the perspective of power saving of legacy STAs (e.g., EHT STAs). For example, EHT STAs may stop decoding without interpreting the above-described bit combinations since they are new combinations. The above-described bit combinations may also be used in the P160 HE TB PPDU + S160 UHR TB PPDU instructions described below.

Additionally or alternatively, to trigger/indicate a non-legacy TB PPDU, B54 may be set to the value 1, B55 may be set to the value 1, and the Non-Legacy Variant Special User Information Field Flag subfield may be set to the value 0.

Here, since the UHR Variant Special User Information Field Flag subfield value is set to 0, any non-legacy STA that decodes the trigger frame can interpret the trigger frame as an enhanced trigger frame.

The bit combination described above can be used to trigger P160 HE TB PPDU + S160 UHR TB PPDU. The above method may not be desirable from the perspective of power saving of legacy STAs (e.g., EHT STAs). EHT STAs can interpret the above described situation as a situation to trigger HE TB PPDU, and therefore can continue to decode the corresponding trigger frame.

Next, to trigger/indicate P160 HE TB PPDU + S160 non-legacy TB PPDU, B54 may be set to 0 value, B55 may be set to 1 value, and UHR Variant Special User Information Field Flag subfield may be set to 0 value.

This setting is not used in legacy trigger frames. Therefore, when decoding this trigger frame, (any) non-legacy STA may interpret it as a non-legacy trigger frame (i.e., enhanced trigger frame). This setting may also be used to trigger non-legacy TB PPDUs.

In this setting, EHT STA cannot be allocated to HE TB PPDU, which may result in low channel utilization.

Since the B54, B55 and UHR variant special user information field flag subfields for HE STA are bits corresponding to the UL HE-SIG-A2 Reserved subfield, HE STA may ignore the corresponding settings, and HE TB PPDU allocation for HE STA may be possible.

Alternatively, for HE TB PPDU allocation to EHT STA, to trigger/indicate P160 HE TB PPDU + S160 non-legacy TB PPDU, B54 may be set to 1 value, B55 may be set to 1 value, and Non-Legacy Variant Special User Information Field Flag subfield may be set to 0 value.

Since the non-legacy variant special user information field flag subfield is set to 0 in the corresponding setting, when decoding the corresponding trigger frame, (all) non-legacy STAs can interpret it as a non-legacy trigger frame (i.e., an enhanced trigger frame).

The non-legacy variant special user information field flag subfield is a reserved subfield for EHT STA, and may be a bit corresponding to the UL HE-SIG-A2 Reserved subfield for HE STA. Therefore, EHT STA/HE STA may ignore the setting, and HE TB PPDU allocation for EHT STA/HE STA may be possible.

Variants of the user information field may be distinguished by using B39 of the user information field, and B39 set to 0 may indicate a HE variant, and B39 set to 1 may indicate a non-legacy variant. The bit combination described above may also be used to indicate a non-legacy TB PPDU.

Alternatively, to trigger/indicate a P160 HE TB PPDU + S160 non-legacy TB PPDU, B54 may be set to the value 1, B55 may be set to the value 0, and the non-legacy variant special user information field flag subfield may be set to the value 0.

Since the non-legacy variant special user information field flag subfield is set to 0 in the corresponding setting, when decoding the corresponding trigger frame, (all) non-legacy STAs may interpret it as a non-legacy trigger frame (i.e., an enhanced trigger frame).

The non-legacy variant special user information field flag subfield is a reserved subfield for EHT STA, and may be a bit corresponding to the UL HE-SIG-A2 Reserved subfield for HE STA. Therefore, EHT STA/HE STA may ignore the setting, and HE TB PPDU allocation for EHT STA/HE STA may be possible.

This setting may be defined to trigger P160 HE TB PPDU + S160 EHT TB PPDU + SS160/320 UHR TB PPDU in a wider bandwidth situation described later (e.g., by determining the presence of EHT variant special user information field).

EHT STA may be allocated and transmitted in HE TB PPDU, and an error may occur depending on the implementation because the EHT variant special user information field does not exist.

Alternatively, to trigger/indicate a P160 HE TB PPDU + S160 non-legacy TB PPDU, B54 may be set to 0 value, B55 may be set to 0 value, and the non-legacy variant special user information field flag subfield may be set to 0 value.

Since the non-legacy variant special user information field flag subfield is set to 0 in the corresponding setting, when decoding the corresponding trigger frame, (all) non-legacy STAs may interpret it as a non-legacy trigger frame (i.e., an enhanced trigger frame).

Here, the EHT STA may interpret that the trigger frame triggers EHT TB PPDU on all channels. However, since S160 is allocated only for non-legacy STAs, this may not be a major problem.

The variants of the user information field may be distinguished by using B39 of the user information field, and B39 set to 0 can indicate a HE variant, and B39 set to 1 can indicate a non-legacy variant. The bit combination described above can also be used to indicate a non-legacy TB PPDU. The bit combination described above can also be used to indicate a UHR TB PPDU.

### Embodiment 1-2

Embodiments 1-2 relate to a method of triggering different types of TB PPDUs via B54, B55, non-legacy (e.g., UHR) P160 subfields and non-legacy (e.g., UHR) variant special user information field flag subfields.

First, to trigger/indicate HE TB PPDU, B54 may be set to 1, B55 may be set to 1, non-legacy P160 subfield may be set to 1, and non-legacy variant special user information field flag subfield may be set to 1.

Next, to trigger/indicate EHT TB PPDU, B54 may be set to 0 value, B55 may be set to 0 value, non-legacy P160 subfield may be set to 1 value, and non-legacy variant special user information field flag subfield may be set to 1 value.

Next, to trigger/indicate P160 HE TB PPDU + S160 EHT TB PPDU, B54 may be set to 1 value, B55 may be set to 0 value, non-legacy P160 subfield may be set to 1 value, and non-legacy variant special user information field flag subfield may be set to 1 value.

Additionally, variants of the user information field can be distinguished using B39 of the user information field. For example, if B39 is set to a value of 0, this means a HE variant, and if B39 is set to a value of 1, this means an EHT variant. In this case, the EHT STA can interpret that the trigger frame triggers an EHT TB PPDU on all channels. However, since S160 is allocated only to non-legacy STAs, this may not be a major problem.

Next, to trigger/indicate a non-legacy TB PPDU, B54 may be set to 0 value, B55 may be set to 1 value, non-legacy P160 subfield may be set to 0 value, and non-legacy variant special user information field flag subfield may be set to 0 value.

This setting is not used in legacy trigger frames. Therefore, when decoding such trigger frame, (any) non-legacy STA may interpret it as a non-legacy trigger frame (i.e., enhanced trigger frame).

This method may be desirable from the perspective of power saving for legacy STAs (e.g., EHT STAs). For example, EHT STAs may stop decoding without interpreting the above-described bit combinations because they are new combinations.

Alternatively, to trigger/indicate a non-legacy TB PPDU, B54 may be set to a value of 1, B55 may be set to a value of 1, the non-legacy P160 subfield may be set to a value of 0, and the non-legacy variant special user information field flag subfield may be set to a value of 0.

Since the non-legacy P160 subfield and the non-legacy variant special user information field flag subfield are set to 0 in the corresponding setting, when decoding the corresponding trigger frame, (any) non-legacy STA can interpret it as a non-legacy trigger frame (i.e., an enhanced trigger frame).

This method may be desirable from the perspective of power saving for legacy STAs (e.g., EHT STAs). For example, EHT STAs may stop decoding without interpreting the above-described bit combinations because they are new combinations.

Next, to trigger/indicate P160 HE TB PPDU + S160 non-legacy TB PPDU, B54 may be set to 1, B55 may be set to 1, UHR P160 subfield may be set to 1, and UHR Variant Special User Information Field Flag subfield may be set to 0.

Since the non-legacy variant special user information field flag subfield is set to 0 in the corresponding setting, when decoding the corresponding trigger frame, (all) non-legacy STAs may interpret it as a non-legacy trigger frame (i.e., an enhanced trigger frame).

The non-legacy variant special user information field flag subfield is a reserved subfield for EHT STA, and may be a bit corresponding to the UL HE-SIG-A2 Reserved subfield for HE STA. Therefore, EHT STA/HE STA may ignore the setting, and HE TB PPDU allocation for EHT STA/HE STA may be possible.

Variants of the user information field can be distinguished by using B39 of the user information field, and B39 set to a value of 0 can indicate an HE variant, and B39 set to a value of 1 can indicate a non-legacy variant.

Next, to trigger/indicate P160 EHT TB PPDU + S160 non-legacy TB PPDU, B54 may be set to 0 value, B55 may be set to 0 value, non-legacy P160 subfield may be set to 1 value, and non-legacy variant special user information field flag subfield may be set to 0 value.

Since the non-legacy variant special user information field flag subfield is set to 0 in the corresponding setting, when decoding the corresponding trigger frame, (all) non-legacy STAs may interpret it as a non-legacy trigger frame (i.e., an enhanced trigger frame).

Additionally, variants of the user information field can be distinguished using B39 of the user information field. For example, if B39 is set to a value of 0, this means an EHT variant, and if B39 is set to a value of 1, this means a UHR variant. In this case, the EHT STA can interpret that the trigger frame triggers an EHT TB PPDU on all channels. However, since S160 is allocated only to non-legacy STAs, this may not be a major problem.

### Embodiment 1-3

Embodiments 1-3 relate to a method of triggering different types of TB PPDUs via B54, B55, non-legacy (e.g., UHR) P160 subfields and A-PPDU flag subfields.

Additionally, B55 may indicate the presence of a non-legacy variant special user information field as well as an EHT variant user information field.

First, to trigger/indicate HE TB PPDU, B54 may be set to 1, B55 may be set to 1, non-legacy P160 subfield may be set to 1, and A-PPDU Flag subfield may be set to 1.

Next, to trigger/indicate EHT TB PPDU, B54 may be set to 0 value, B55 may be set to 0 value, non-legacy P160 subfield may be set to 1 value, and A-PPDU Flag subfield may be set to 1 value.

Next, to trigger/indicate P160 HE TB PPDU + S160 EHT TB PPDU, B54 may be set to 1, B55 may be set to 0, non-legacy P160 subfield may be set to 1, and A-PPDU Flags subfield may be set to 1.

Additionally, variants of the user information field can be distinguished using B39 of the user information field. For example, if B39 is set to a value of 0, this means an HE variant, and if B39 is set to a value of 1, this means an EHT variant.

Alternatively, to trigger/indicate P160 HE TB PPDU + S160 EHT TB PPDU, B54 may be set to value 1, B55 may be set to value 0, non-legacy P160 subfield may be set to value 1, and A-PPDU Flags subfield may be set to value 0.

The A-PPDU Flag subfield is a reserved subfield for EHT STA, and may be a bit corresponding to the UL HE-SIG-A2 Reserved subfield for HE STA. Therefore, EHT STA / HE STA may ignore the setting, and HE TB PPDU allocation for EHT STA / HE STA may be possible.

The configuration can be defined in a way that triggers P160 HE TB PPDU + S160 EHT TB PPDU or P160 HE TB PPDU + S160 EHT TB PPDU + SS160/320 non-legacy TB PPDU in wider bandwidth situation described later, and the triggering TB PPDU can be distinguished via PHY version identifier subfield.

Here, the variant of the user information field can be distinguished using B39 of the user information field. For example, if B39 is set to a value of 0, this means an HE variant, and if B39 is set to a value of 1, this means an EHT variant.

Here, the EHT STA can interpret that the trigger frame triggers EHT TB PPDU on all channels. However, since S160 is allocated only for non-legacy STAs, this may not be a major problem.

Next, to trigger/indicate a non-legacy TB PPDU, B54 may be set to 0 value, B55 may be set to 1 value, non-legacy P160 subfield may be set to 0 value, and A-PPDU Flag subfield may be set to 0 value.

This setting is not used in legacy trigger frames. Therefore, when decoding such trigger frame, (any) non-legacy STA may interpret it as a non-legacy trigger frame (i.e., enhanced trigger frame).

B55 is set to a value of 1, but non-legacy STAs may interpret that setting as a special case and the presence of a non-legacy variant special user information field.

This method may be desirable from the perspective of power saving for legacy STAs (e.g., EHT STAs). For example, EHT STAs may stop decoding without interpreting the above-described bit combinations because they are new combinations.

Alternatively, to trigger/indicate a non-legacy TB PPDU, B54 may be set to 1 or 0, B55 may be set to 0, the non-legacy P160 subfield may be set to 0, and the A-PPDU Flags subfield may be set to 1.

Since the non-legacy P160 subfield is set to 0 in the configuration, when decoding the trigger frame, (any) non-legacy STA can interpret it as a non-legacy trigger frame (i.e., an enhanced trigger frame).

This method may not be desirable from a power saving perspective for legacy STAs (e.g., EHT STAs). EHT STAs may continue to decode as they interpret the situation as triggering a P160 HE TB PPDU + S160 EHT TB PPDU or an EHT TB PPDU.

Next, to trigger/indicate P160 HE TB PPDU + S160 non-legacy TB PPDU, B54 may be set to 1, B55 may be set to 0, UHR P160 subfield may be set to 1, and A-PPDU Flag subfield may be set to 0.

Since the A-PPDU Flags subfield is set to 0 in the configuration, when decoding the trigger frame, (all) non-legacy STAs may interpret it as a non-legacy trigger frame (i.e., an enhanced trigger frame).

The UHR P160 subfield and the A-PPDU Flag subfield are reserved subfields for EHT STA, and may be bits corresponding to the UL HE-SIG-A2 Reserved subfield for HE STA. Therefore, the EHT STA/HE STA may ignore the corresponding settings, and HE TB PPDU allocation for the EHT STA/HE STA may be possible.

Variants of the user information field can be distinguished by using B39 of the user information field, and B39 set to a value of 0 can indicate an HE variant, and B39 set to a value of 1 can indicate a non-legacy variant.

This setting may be set in the same way as triggering P160 HE TB PPDU + S160 EHT TB PPDU + SS160/320 UHR TB PPDU in a wider bandwidth situation described later. The two settings described above may be distinguished by whether the special user information field exists only in UHR or in both EHT and UHR.

Next, to trigger/indicate P160 EHT TB PPDU + S160 non-legacy TB PPDU, B54 may be set to 0 value, B55 may be set to 0 value, non-legacy P160 subfield may be set to 1 value, and A-PPDU Flag subfield may be set to 0 value.

Since the A-PPDU Flags subfield is set to 0 in the configuration, when decoding the trigger frame, (all) non-legacy STAs can interpret it as a non-legacy trigger frame (i.e., an enhanced trigger frame).

Here, the EHT STA can interpret that the trigger frame triggers EHT TB PPDU on all channels. However, since S160 is allocated only for non-legacy STAs, this may not be a major problem.

Additionally, variants of the user information field can be distinguished using B39 of the user information field. For example, if B39 is set to a value of 0, this means an EHT variant, and if B39 is set to a value of 1, this means a UHR variant.

### Embodiment 1-4

Embodiments 1-4 relate to a method of triggering different types of TB PPDUs via B54, B55 and non-legacy (e.g., UHR) trigger flag subfields.

Embodiment 1-4 may be an embodiment in which a non-legacy trigger flag subfield is used instead of the non-legacy variant special user information field flag subfield in Embodiment 1-1. However, this is only one embodiment, and various types of TB PPDUs may be triggered in a manner described later.

Additionally, B55 may indicate the presence of a UHR variant special user information field as well as an EHT variant special user information field.

First, to trigger/indicate HE TB PPDU, B54 may be set to 1, B55 may be set to 1, and the non-legacy trigger flag subfield may be set to 1.

Next, to trigger/indicate EHT TB PPDU, B54 may be set to 0 value, B55 may be set to 0 value, and non-legacy trigger flag subfield may be set to 1 value.

Next, in order to trigger/indicate P160 HE TB PPDU + S160 EHT TB PPDU, B54 may be set to a value of 1, B55 may be set to a value of 0, and the non-legacy trigger flag subfield may be set to a value of 1. Additionally, a variant of the user information field may be distinguished using B39 of the user information field. For example, when B39 is set to a value of 0, this indicates a HE variant, and when B39 is set to a value of 1, this indicates an EHT variant.

With respect to the aforementioned TB PPDU configuration, when decoding the trigger frame, (any) non-legacy (e.g., UHR) STA may interpret it as a legacy trigger frame (e.g., the trigger frame in FIG. 8). In this case, the aforementioned TB PPDU configuration may not be a problem since it is not related to a non-legacy TB PPDU.

Next, to trigger/indicate a non-legacy TB PPDU, B54 may be set to 0, B55 may be set to 1, and the non-legacy trigger flag subfield may be set to 0.

This setting is not used in legacy trigger frames. Therefore, when decoding such trigger frame, (any) non-legacy STA may interpret it as a non-legacy trigger frame (i.e., enhanced trigger frame).

B55 is set to a value of 1, but non-legacy STAs may identify that setting as a special case and interpret it as the presence of a non-legacy special user information field.

This method may be desirable from the perspective of power saving of legacy STAs (e.g., EHT STAs). For example, EHT STAs may stop decoding without interpreting the above-described bit combinations because they are new combinations.

Additionally or alternatively, to trigger/indicate a non-legacy TB PPDU, B54 may be set to 0, B55 may be set to 0, and the non-legacy trigger flag subfield may be set to 0.

Here, since the non-legacy trigger flag subfield value is set to 0, any non-legacy STA (i.e., UHR STA) that decodes the trigger frame can interpret it as an enhanced trigger frame.

The bit combination described above can be used to trigger P160 EHT TB PPDU + S160 UHR TB PPDU. As another example, whether P160 EHT TB PPDU + S160 UHR TB PPDU is triggered can be indicated by the presence or absence of EHT Variant Special User Information field.

This method may be desirable from the perspective of power saving for legacy STAs (e.g., EHT STAs). For example, EHT STAs may stop decoding without interpreting the above-described bit combinations because they are new combinations.

Next, to trigger/indicate P160 HE TB PPDU + S160 non-legacy TB PPDU, B54 may be set to 1, B55 may be set to 0, and the non-legacy trigger flag subfield may be set to 0.

Since the non-legacy trigger flag subfield is set to 0 in the configuration, when decoding the trigger frame, (all) non-legacy STAs may interpret it as a non-legacy trigger frame (i.e., an enhanced trigger frame).

Since the B54, B55 and UHR variant special user information field flag subfields for HE STA are bits corresponding to the UL HE-SIG-A2 Reserved subfield, HE STA may ignore the corresponding settings, and HE TB PPDU allocation for HE STA may be possible.

This setting is identical to the method to trigger P160 HE TB PPDU + S160 EHT TB PPDU + SS160/S320 non-legacy TB PPDU in wider bandwidth situation described later, but the two settings can be distinguished by the EHT Variant Special User Information field described above.

EHT STA can be allocated to HE TB PPDU and perform transmission, but since EHT variant special user information field does not exist, an error may occur depending on the implementation.

As described in Embodiment 1-1, when each of B54 and B55 is set to a value of 1 and the non-legacy trigger flag subfield is set to a value of 0, P160 HE TB PPDU + S160 non-legacy TB PPDU can be triggered/indicated. In this case, when B55 is set to a value of 1, a non-legacy STA can interpret that a non-legacy variant special user information field exists as a special case.

Alternatively, to trigger/indicate P160 HE TB PPDU + S160 non-legacy TB PPDU, B54 may be set to 0 value, B55 may be set to 0 value, and the non-legacy trigger flag subfield may be set to 0 value.

Since the non-legacy trigger flag subfield is set to 0 in the configuration, when decoding the trigger frame, (all) non-legacy STAs may interpret it as a non-legacy trigger frame (i.e., an enhanced trigger frame).

Here, the EHT STA may interpret that the trigger frame triggers EHT TB PPDU on all channels. However, since S160 is allocated only for non-legacy STAs, this may not be a major problem.

Additionally, variants of the user information field can be distinguished using B39 of the user information field. For example, when B39 is set to a value of 0, it means an EHT variant, and when B39 is set to a value of 1, it means a UHR variant. This setting can also be used for non-legacy TB PPDU indication.

In embodiments 1-1 to 1-4, when B54 is set to 1, it may be indicated that a HE TB PPDU is located at the primary 160 MHz, and when B54 is set to 0, it may be indicated that an EHT TB PPDU or a non-legacy HE TB PPDU is located at the primary 160 MHz. That is, the meaning of B54 of the common information field of the non-legacy trigger frame may be modified as described above.

In embodiments 1-1 to 1-2, when B55 is set to 1, it may be indicated that the EHT variant special user information field does not exist. When B55 is set to 0, it may be indicated that the EHT variant special user information field exists. At this time, it may be irrelevant whether the non-legacy variant special user information field exists. That is, the meaning of B55 of the common information field of the non-legacy trigger frame may be the same as the meaning of B55 of the common information field of the EHT trigger frame.

In embodiment 1-3, when the A-PPDU flag subfield value is set to 1, this may mean that no A-PPDU is indicated or that an A-PPDU that does not include a non-legacy PPDU is indicated. When the A-PPDU flag subfield value is set to 1, this may mean that an A-PPDU that includes a non-legacy PPDU is indicated. That is, the meaning of the A-PPDU flag subfield included in the common information field of the non-legacy trigger frame can be defined as described above.

In Embodiments 1-3 and 1-4, the presence or absence of the non-legacy variant special user information field may be indicated by B55, but may also be indicated implicitly.

Information for triggering a non-legacy TB PPDU or an A-PPDU containing a non-legacy TB PPDU can be transmitted in the non-legacy variant common information field and the non-legacy variant special user information field.

Non-Legacy Variant Special User Information Fields

A non-legacy variant special user information field can be defined based on a legacy special user information field (e.g., the special user information field in FIG. 8).

The non-legacy variant special user information field can be used to indicate information of a non-legacy TB PPDU. In this regard, the non-legacy variant special user information field can also indicate information of an EHT TB PPDU.

If a non-legacy variant special user information field exists, the field may be located after the non-legacy common information field. If a legacy special user information field (e.g., EHT variant special user information field) exists in the trigger frame, the legacy special user information field may be located after the non-legacy common information field, and then the non-legacy variant special user information field may be located thereafter.

Each subfield of the non-legacy variant special user information field can be as follows.

The AID12 subfield can be set to a value such as 2007 (same as the existing value) or 2008.

Additionally, the PHY version identifier subfield may indicate non-legacy (i.e., next version).

Additionally, the UL bandwidth extension subfield can indicate up to 320 MHz bandwidth together with the UL BW subfield, and can also indicate additional bandwidth using reserved values.

Additionally, the EHT Spatial Reuse 1/2 subfield may be renamed to the non-legacy Spatial Reuse 1/2 subfield and defined in the same way as before.

Additionally, the U-SIG Disregard And Validate subfield may be set to a value that applies to the setting of the value of the U-SIG Disregard / Validate field of a non-legacy TB PPDU. Depending on the Disregard / Validate field defined in the (actual) non-legacy TB PPDU, only some bits may be used, or some or all bits of the reserved subfields of B37 to B39 may be additionally used.

When triggering/requesting a P160 EHT TB PPDU + S160 non-legacy TB PPDU, both the EHT variant special user information field and the non-legacy variant special user information field may be present. Alternatively, if the contents are nearly identical, only the non-legacy variant special user information field may be present.

In this case, the AID 12 subfield must be set to 2007, and the EHT STA may interpret the non-legacy variant special user information field as if it were an EHT variant special user information field based on the legacy definition. On the other hand, the non-legacy STA may interpret the non-legacy variant special user information field based on the new definition.

In this regard, the PHY version identifier subfield needs to be set to EHT, but non-legacy STAs can interpret it based on the new definition. However, since non-legacy STAs can be assigned to the EHT TB PPDU portion, the implementation complexity may be high since both interpretations must be possible.

### Non-Legacy Variant User Information Fields

Non-legacy variant user information fields may be defined based on legacy user information fields (e.g., EHT variant user information fields in FIG. 8).

The non-legacy variant user information field may be used to indicate information of a user assigned to a non-legacy TB PPDU transmission.

The non-legacy variant user information field may be located after the non-legacy variant special user information field. If a legacy user information field (e.g., HE/EHT variant user information field) exists in the trigger frame, the non-legacy variant special user information field may be located after the legacy user information field (e.g., HE/EHT variant user information field), and the non-legacy variant user information field may be located after that.

Each subfield of the non-legacy variant user information field can be as follows:
The AID 12 subfield may indicate the AID of a non-legacy STA.

Additionally, the RU allocation subfield indicates RU allocation information, and the definition of the existing RU allocation subfield may be used as is, or some RU allocation information may be changed/added/excluded.

Additionally, the UL FEC coding type subfield may be defined in the same way as before.

Additionally, the UL EHT-MCS subfield may be renamed to UL non-legacy-MCS subfield (a different name may be used), defined in the same way as before, or some MCSs may be changed/added/excluded.

Additionally, the reserved subfields may be maintained in the same manner as before.

Additionally, the SS allocation subfield may be defined in the same way as before, or alternatively, up to 16 additional streams can be indicated.

Additionally, the RA-RU information subfield and the UL target reception power subfield can be defined in the same manner as in the conventional manner.

Additionally, the PS160 subfield may be used to indicate RU allocation information together with the RU allocation subfield. In particular, the subfield may indicate information on whether the RU is within P160 or within S160. Through this, variant information of the user information field may be indicated in the case of A-PPDU.

The above-described proposal considers a bandwidth of up to 320 MHz, but in the next-generation wireless LAN system (e.g., UHR-based wireless LAN system), a bandwidth of up to 480/640 MHz may be defined. Taking this into account, additional subfields may be defined to distinguish the bandwidth indication and PPDU/user information fields, which will be described in Embodiment 2.

### Embodiment 2

This embodiment is for non-legacy trigger frames defined up to 480 MHz or 640 MHz bandwidth/channel width.

Next-generation wireless LAN systems (e.g., next-generation WiFi systems) may be defined to have bandwidths of up to 480 MHz or 640 MHz. Taking this into account, additional subfields, etc. may be defined as described in this embodiment, and the subfields may be used for bandwidth indication and PPDU/user information field variant differentiation.

### Bandwidth indication Method

In the existing wireless LAN system, a method of indicating a bandwidth of up to 320 MHz is defined using the UL BW subfield of the EHT variant common information field and the UL BW extension subfield of the special user information field, and some combinations of values among them are reserved.

In the trigger frame of the next generation wireless LAN system (i.e., the non-legacy trigger frame described above), a bandwidth of up to 320 MHz may be indicated using the same method as described above. Additionally, a specific reserved value may be used to indicate a wider bandwidth.

That is, a bandwidth of up to 320 MHz can be indicated by using the same combination of values as before, using the UL BW subfield of the non-legacy variant common information field and the UL BW extension subfield of the non-legacy variant special user information field. A wider bandwidth may be indicated by using the following combinations of various reserved bits.

Depending on the channelization, there may be only one 480MHz/640MHz, or there may be various types such as 320-1MHz/320-2MHz. The proposed method in the present disclosure is explained assuming that a specific channel type is defined.

Hereinafter, methods for indicating 480MHz / 640MHz bandwidth according to the proposal in the present disclosure are exemplified.

For example, to indicate a 480 MHz bandwidth, the UL BW subfield may be set to values 0 / 1 / 2, and the UL BW extension subfield may be set to value 1. To indicate a 640 MHz bandwidth, the UL BW subfield may be set to values 0 / 1 / 2, and the UL BW extension subfield may be set to value 2. In the examples, other combinations of values may follow the existing indication method.

For example, to indicate a 480MHz bandwidth, the UL BW subfield may be set to values 0 / 1 / 2, and the UL BW extension subfield may be set to value 1. To indicate a 640-1MHz bandwidth, the UL BW subfield may be set to values 0 / 1 / 2, and the UL BW extension subfield may be set to value 2. To indicate a 640-2MHz bandwidth, the UL BW subfield may be set to values 0 / 1 / 2, and the UL BW extension subfield may be set to value 3. In the examples, other combinations of values may follow the existing indication method.

For example, to indicate a 480-1MHz bandwidth, the UL BW subfield may be set to values 0 / 1 / 2, and the UL BW extension subfield may be set to value 1. To indicate a 480-2MHz bandwidth, the UL BW subfield may be set to values 0 / 1 / 2, and the UL BW extension subfield may be set to value 2. To indicate a 640MHz bandwidth, the UL BW subfield may be set to values 0 / 1 / 2, and the UL BW extension subfield may be set to value 3. In the examples, other combinations of values may follow the existing indication method.

For example, to indicate a 480 MHz bandwidth, the UL BW subfield may be set to the value 0 / 1, and the UL BW extension subfield may be set to the value 1. To indicate a 640 MHz bandwidth, the UL BW subfield may be set to the value 1 / 2, and the UL BW extension subfield may be set to the value 1. In the example, other combinations of values may follow the existing indication method.

For example, to indicate a 480MHz bandwidth, the UL BW subfield may be set to the value 0 / 1, and the UL BW extension subfield may be set to the value 1. To indicate a 640-1MHz bandwidth, the UL BW subfield may be set to the value 1 / 2, and the UL BW extension subfield may be set to the value 1. To indicate a 640-2MHz bandwidth, the UL BW subfield may be set to the value 1 / 2, and the UL BW extension subfield may be set to the value 2. In the examples, other combinations of values may follow the existing indication method.

For example, to indicate a 480MHz bandwidth, the UL BW subfield may be set to a value of 0 / 1, and the UL BW Extension subfield may be set to a value of 1. To indicate a 640-1MHz bandwidth, the UL BW subfield may be set to a value of 1 / 2, and the UL BW Extension subfield may be set to a value of 1. To indicate a 640-2MHz bandwidth, the UL BW subfield may be set to a value of 1 / 2, and the UL BW Extension subfield may be set to a value of 2. To indicate a 640-3MHz bandwidth, the UL BW subfield may be set to a value of 1 / 2, and the UL BW Extension subfield may be set to a value of 3. In the examples, other combinations of values may follow the existing indication method.

For example, to indicate a 480-1MHz bandwidth, the UL BW subfield may be set to a value of 0 / 1, and the UL BW extension subfield may be set to a value of 1. To indicate a 480-2MHz bandwidth, the UL BW subfield may be set to a value of 0 / 1, and the UL BW extension subfield may be set to a value of 2. To indicate a 640MHz bandwidth, the UL BW subfield may be set to a value of 1 / 2, and the UL BW extension subfield may be set to a value of 1. In the examples, other combinations of values may follow the existing indication method.

For example, to indicate a 480-1MHz bandwidth, the UL BW subfield may be set to a value of 0 / 1, and the UL BW extension subfield may be set to a value of 1. To indicate a 480-2MHz bandwidth, the UL BW subfield may be set to a value of 0 / 1, and the UL BW extension subfield may be set to a value of 2. To indicate a 640-1MHz bandwidth, the UL BW subfield may be set to a value of 1 / 2, and the UL BW extension subfield may be set to a value of 1. To indicate a 640-2MHz bandwidth, the UL BW subfield may be set to a value of 1 / 2, and the UL BW extension subfield may be set to a value of 2. In the examples, other combinations of values may follow the existing indication method.

For example, to indicate a 480-1MHz bandwidth, the UL BW subfield may be set to a value of 0 / 1, and the UL BW extension subfield may be set to a value of 1. To indicate a 480-2MHz bandwidth, the UL BW subfield may be set to a value of 0 / 1, and the UL BW extension subfield may be set to a value of 2. To indicate a 640-1MHz bandwidth, the UL BW subfield may be set to a value of 1 / 2, and the UL BW extension subfield may be set to a value of 1. To indicate a 640-2MHz bandwidth, the UL BW subfield may be set to a value of 1 / 2, and the UL BW extension subfield may be set to a value of 2. To indicate a 640-3MHz bandwidth, the UL BW subfield may be set to a value of 1 / 2, and the UL BW extension subfield may be set to a value of 3. In this example, other combinations of values can follow the existing directives.

For example, to indicate a 480-1MHz bandwidth, the UL BW subfield may be set to a value of 0 / 1, and the UL BW extension subfield may be set to a value of 1. To indicate a 480-2MHz bandwidth, the UL BW subfield may be set to a value of 0 / 1, and the UL BW extension subfield may be set to a value of 2. To indicate a 480-3MHz bandwidth, the UL BW subfield may be set to a value of 0 / 1, and the UL BW extension subfield may be set to a value of 3. To indicate a 640MHz bandwidth, the UL BW subfield may be set to a value of 1 / 2, and the UL BW extension subfield may be set to a value of 1. In the examples, other combinations of values may follow the existing indication method.

For example, to indicate a 480-1MHz bandwidth, the UL BW subfield may be set to a value of 0 / 1, and the UL BW Extension subfield may be set to a value of 1. To indicate a 480-2MHz bandwidth, the UL BW subfield may be set to a value of 0 / 1, and the UL BW Extension subfield may be set to a value of 2. To indicate a 480-3MHz bandwidth, the UL BW subfield may be set to a value of 0 / 1, and the UL BW Extension subfield may be set to a value of 3. To indicate a 640-1MHz bandwidth, the UL BW subfield may be set to a value of 1 / 2, and the UL BW Extension subfield may be set to a value of 1. To indicate a 640-2MHz bandwidth, the UL BW subfield may be set to a value of 1 / 2, and the UL BW Extension subfield may be set to a value of 2. In this example, other combinations of values can follow the existing directives.

For example, to indicate a 480-1MHz bandwidth, the UL BW subfield may be set to a value of 0 / 1, and the UL BW extension subfield may be set to a value of 1. To indicate a 480-2MHz bandwidth, the UL BW subfield may be set to a value of 0 / 1, and the UL BW extension subfield may be set to a value of 2. To indicate a 480-3MHz bandwidth, the UL BW subfield may be set to a value of 0 / 1, and the UL BW extension subfield may be set to a value of 3. To indicate a 640-1MHz bandwidth, the UL BW subfield may be set to a value of 1 / 2, and the UL BW extension subfield may be set to a value of 1. To indicate a 640-2MHz bandwidth, the UL BW subfield may be set to a value of 1 / 2, and the UL BW extension subfield may be set to a value of 2. To indicate a 640-3MHz bandwidth, the UL BW subfield may be set to the value 1/2, and the UL BW Extension subfield may be set to the value 3. In this example, other combinations of values may follow the existing indication method.

For example, to indicate a 480MHz bandwidth, the UL BW subfield may be set to the values 0 / 1 /2, and the UL BW Extension subfield may be set to the value 1. In this example, other combinations of values may follow the existing indication method.

For example, to indicate a 480-1MHz bandwidth, the UL BW subfield may be set to values 0 / 1 /2, and the UL BW extension subfield may be set to value 1. To indicate a 480-2MHz bandwidth, the UL BW subfield may be set to values 0 / 1 /2, and the UL BW extension subfield may be set to value 2. In the example, other combinations of values may follow the existing indication method.

For example, to indicate a 480-1MHz bandwidth, the UL BW subfield may be set to values 0 / 1 /2, and the UL BW extension subfield may be set to a value of 1. To indicate a 480-2MHz bandwidth, the UL BW subfield may be set to values 0 / 1 /2, and the UL BW extension subfield may be set to a value of 2. To indicate a 480-3MHz bandwidth, the UL BW subfield may be set to values 0 / 1 /2, and the UL BW extension subfield may be set to a value of 3. In the examples, other combinations of values may follow the existing indication method.

For example, to indicate a 640 MHz bandwidth, the UL BW subfield may be set to the values 0 / 1/2, and the UL BW extension subfield may be set to the value 1. In this example, other combinations of values may follow the existing indication method.

For example, to indicate a 640-1MHz bandwidth, the UL BW subfield may be set to values 0 / 1 /2, and the UL BW extension subfield may be set to value 1. To indicate a 640-2MHz bandwidth, the UL BW subfield may be set to values 0 / 1 /2, and the UL BW extension subfield may be set to value 2. In the example, other combinations of values may follow the existing indication method.

For example, to indicate a 640-1MHz bandwidth, the UL BW subfield may be set to values 0 / 1 /2, and the UL BW extension subfield may be set to value 1. To indicate a 640-2MHz bandwidth, the UL BW subfield may be set to values 0 / 1 /2, and the UL BW extension subfield may be set to value 2. To indicate a 640-3MHz bandwidth, the UL BW subfield may be set to values 0 / 1 /2, and the UL BW extension subfield may be set to value 3. In the examples, other combinations of values may follow the existing indication method.

With respect to the proposed method described above, when triggering TB A-PPDU of EHT TB PPDU and non-legacy TB PPDU, not only the non-legacy special user information field but also the legacy special user information field (in particular, the UL BW extension subfield within the field) must be present. This is because it is necessary to indicate not only the bandwidth of the non-legacy TB PPDU but also the bandwidth of the EHT TB PPDU, and the value combination in the proposed method described above cannot indicate up to the bandwidth of the EHT TB PPDU.

Additionally or alternatively, for bandwidth indication, a method may be considered to indicate additional bandwidth by using one or more bits (e.g., B37 to B39) corresponding to reserved subfields of the existing special user information field in the non-legacy variant special user information field. In this case, the UL BW subfield of the non-legacy variant common information field and the UL BW extension subfield of the non-legacy variant special user information field may use the existing indication method.

When indicating bandwidth using the corresponding bits (e.g., B37 to B39), the bandwidth can be indicated independently. Alternatively, in this case, additional bandwidth can be indicated using a combination of the values of the UL BW subfield, the UL BW extension subfield, and the corresponding bit values, as in the conventional method.

When using the additional bits as described above, only the non-legacy special user information field can exist when triggering the TB A-PPDU of the EHT TB PPDU and the non-legacy TB PPDU. In this case, the EHT STA may determine the non-legacy special user information field as a legacy special user information field and interpret it as before. On the other hand, the non-legacy STA may interpret the non-legacy special user information field according to the newly defined method.

Therefore, the method can simultaneously indicate the bandwidth of EHT TB PPDU and non-legacy TB PPDU. In this case, the PHY version identifier subfield needs to be set to EHT, but non-legacy STA can interpret based on the new definition. However, since non-legacy STA can be assigned to the EHT TB PPDU part, both interpretations need to be possible, which may increase the implementation complexity.

### Distinguishing various TB PPDU methods

In order to distinguish TB PPDU in 480MHz/640MHz bandwidth, the method of triggering/indicating the TB PPDU configuration in the aforementioned embodiment 1 (e.g., bit setting method) can be used.

Additionally, various bit combinations described below may be considered to indicate specific channels in various situations considering wider bandwidths (i.e., 480MHz/640MHz bandwidth).

In this regard, it may be assumed that the RU allocation subfield of the non-legacy variant user information field can indicate RU allocation information within a 160MHz unit. In this case, the subfield may exceptionally indicate some large RUs/MRUs corresponding to channels exceeding 160MHz. Therefore, with respect to a specific channel indication, a method of indicating at least a 160MHz channel may be considered.

Hereinafter, specific bit setting schemes are proposed for i) non-legacy (e.g., UHR) TB PPDU, ii) P160 HE TB PPDU + (S160 non-legacy TB PPDU) + S320/SS160 non-legacy TB PPDU, iii) P320 EHT TB PPDU + S320/SS160 non-legacy TB PPDU, iv) P160 EHT TB PPDU + (S160 non-legacy TB PPDU) + S320/SS160 non-legacy TB PPDU, and v) P160 HE TB PPDU + S160 EHT TB PPDU + S320/SS160 non-legacy TB PPDU.

First, to trigger/indicate a non-legacy TB PPDU, B54 of the non-legacy variant common information field may be set to 0, B55 may be set to 1, and the A-PPDU flag subfield may be set to 1.

Alternatively, to trigger/indicate a non-legacy TB PPDU, B54 of the non-legacy variant common information field may be set to a value of 0, B55 may be set to a value of 0, the A-PPDU Flags subfield may be set to a value of 1, and the PHY version identifier subfield in the special user information field (e.g., the non-legacy special user information field) may be set to indicate non-legacy.

In this regard, non-legacy TB PPDU bandwidth indication can be performed using the UL BW subfield in the non-legacy variant common information field and the UL BW extension subfield and additional BW subfield (if present) in the non-legacy variant special user information field. That is, the bandwidth indication method described above can be used.

Using a combination of B39 and B25 of the non-legacy variant user information field, instructions up to 640 MHz may be possible.

In the examples below, 160 and 320 may mean a 160 MHz band/channel and a 320 MHz band/channel, respectively. Additionally, low 160/320 and high 160/320 may mean 160/320 existing in a relatively low band in the frequency domain and 160/320 existing in a relatively high band in the frequency domain, respectively.

For example, a value of 0 in B25 may indicate P320 (or low 320), and a value of 1 in B25 may indicate S320 (or high 320).

The combination of 0 value of B25 and 0 value of B39 may indicate P160. Alternatively, the combination of 0 value of B25 and 0 value of B39 may indicate low 160 at P320, or low 160 at low 320, which may not be desirable when considering unification with other cases.

A combination of 0 value of B25 and 1 value of B39 may indicate S160. Alternatively, a combination of 0 value of B25 and 1 value of B39 may indicate high 160 at P320, or low 320 to high 160, which may not be desirable when considering integration with other cases.

A combination of a 1value of B25 and a 0 value of B39 can indicate 160 corresponding to the position of P160 in S320. Alternatively, a combination of a 1 value of B25 and a 0 value of B39 can indicate a low 160 in S320, or a low 160 in high 320, the latter of which may not be desirable when considering integration with other cases.

A combination of a 1 value of B25 and a 1 value of B39 can indicate 160 corresponding to a position of S160 in S320. Alternatively, a combination of a 1 value of B25 and a 1 value of B39 can indicate a high 160 in S320, or a high 160 in high 320, the latter of which may not be desirable when considering integration with other cases.

Additionally, when only 480MHz of P320 + SS160 is considered, the combination of B25 and B39 of the following non-legacy variant user information field may be utilized. Here, SS160 may mean the remaining 160MHz channel excluding P320 when transmitting at 480MHz.

For example, a combination of a 0 value of B25 and a 0 value of B39 can indicate P160. A combination of a 0 value of B25 and a 1 value of B39 can indicate S160. A combination of a 1 value of B25 and a 1 value (or a 0 value) of B39 can indicate SS160. Alternatively, a combination of a 1 value of B25 and a 0 value of B39 may be reserved.

Alternatively, the following combinations may be used for integration with cases where HE PPDU is included. For example, 0/1 value of B25 and 0 value of B39 may indicate P160. 0 value of B25 and 1 value of B39 may indicate S160. 1 value of B25 and 1 value of B39 may indicate SS160.

Additionally, if only 480MHz of P160 + S320 is considered, the combination of B25 and B39 of the following non-legacy variant user information fields may be utilized.

For example, a combination of a 0 value of B25 and a 0 value (or a 1 value) of B39 can indicate P160. Alternatively, a combination of a 0 value of B25 and a 1 value of B39 can be reserved. A combination of a 1value of B25 and a 0 value of B39 can indicate 160 (or a low 160 in S320) corresponding to a position of P160 in S320. A combination of a 1 value of B25 and a 1 value of B39 can indicate 160 (or a high 160 in S320) corresponding to a position of S160 in S320.

Alternatively, the following combinations may be used for integration with cases where HE TB PPDU is included. For example, 0/1 value of B25 and 0 value of B39 may indicate P160. 0 value of B25 and 1 value of B39 may indicate 160 (or lower 160 in S320) corresponding to position of P160 in S320. A combination of 1 value of B25 and 1 value of B39 may indicate 160 (or higher 160 in S320) corresponding to position of S160 in S320.

Next, to trigger/indicate P160 HE TB PPDU + (S160 non-legacy TB PPDU) + S320/SS160 non-legacy TB PPDU, B54 of the non-legacy variant common information field may be set to 0 value, B55 may be set to 1 value, and the A-PPDU Flag subfield may be set to 0 value. Alternatively, to trigger/indicate P160 HE TB PPDU + (S160 non-legacy TB PPDU) + S320/SS160 non-legacy TB PPDU, B54 of the non-legacy variant common information field is set to 1 value, B55 is set to 0 value, A-PPDU Flags subfield is set to 0 / 1 value, and PHY Version Identifier subfield in the special user information field (e.g., non-legacy special user information field) can be set to indicate non-legacy.

In this regard, the UL BW subfield within the non-legacy variant common information field may indicate 160 MHz.

A-PPDU bandwidth and non-legacy TB PPDU bandwidth indication can be performed using the UL BW subfield in the non-legacy variant common information field and the UL BW extension subfield and additional BW subfield (if present) in the non-legacy variant special user information field. Here, it is also possible to perform indication for only one of the two.

Additionally or alternatively, TB A-PPDU at 640MHz may not be possible. B25 in the HE variant user information field is used as a DCM field with values of 0/1, and B39 is used when it is 0. That is, channel indication using a combination of 1 value of B25 and 0 value of B39 is not possible.

Additionally, when only 480MHz of P320 + S160 is considered, channels, PPDUs and user information field variants are distinguished using B39 of the user information field, and channels can be distinguished using B25 when B39 is set to a value of 1.

For example, a value of 0 in B39 may indicate P160, which may indicate a HE variant user information field (B25 may be a value of 0 or a value of 1). A value of 1 in B39 may indicate S160 or SS160, which may indicate a non-legacy variant user information field. A combination of a value of 0 in B25 and a value of 1 in B39 may indicate S160, and a combination of a value of 1 in B25 and a value of 1 in B39 may indicate SS160.

Additionally, when only 480MHz of P160 + S320 is considered, channels, PPDUs and user information field variants are distinguished using B39 of the user information field, and channels can be distinguished using B25 when B39 is set to a value of 1.

For example, a value of 0 of B39 may indicate P160, which may indicate a HE variant user information field (B25 may be a value of 0 or a value of 1). A value of 1 of B39 may indicate S320 or SS160, which may indicate a non-legacy variant user information field. A combination of a value of 0 of B25 and a value of 1 of B39 may indicate 160 (or a lower 160 in S320) corresponding to a position of P160 in S320. A combination of a value of 1 of B25 and a value of 1 of B39 may indicate 160 (or a higher 160 in S320) corresponding to a position of S160 in S320.

Next, to trigger/indicate P320 EHT TB PPDU + S320/SS160 non-legacy TB PPDU, B54 of the non-legacy variant common information field may be set to 0 value, B55 may be set to 0 value, and A-PPDU flag subfield may be set to 0 value.

In this regard, 320MHz indication may be performed in the UL BW subfield within the non-legacy variant common information field and the UL BW extension subfield within the special user information field (or the non-legacy variant special user information field).

A-PPDU bandwidth and non-legacy TB PPDU bandwidth indication can be performed using the UL BW subfield in the non-legacy variant common information field and the UL BW extension subfield and additional BW subfield (if present) in the non-legacy variant special user information field. Here, it is also possible to perform indication for only one of the two.

Since B25 in the EHT variant user information field is a reserved bit, it is possible to use B25 and B39 in the user information field to indicate channel locations up to 640 MHz.

When considering up to 640MHz, the channel, PPDU and user information field variants can be distinguished using the combination of B25 and B39 of the user information field. Here, EHT STA is judged only using B39, and non-legacy STA will be allocated only to S320, so there may be no problem.

For example, a combination of a 0 value of B25 and a 0 value of B39 indicates P160, which may indicate an EHT variant user information field. A combination of a 0 value of B25 and a 1 value of B39 indicates S160, which may indicate an EHT variant user information field. A combination of a 1 value of B25 and a 0 value of B39 indicates 160 (or a lower 160 in S320) corresponding to a position of P160 in S320, which may indicate a non-legacy variant user information field. A combination of a 1 value of B25 and a 1 value of B39 indicates 160 (or a higher 160 in S320) corresponding to a position of S160 in S320, which may indicate a non-legacy variant user information field.

If only up to 480MHz of P320 + SS160 are considered, the channel, PPDU, and user information field variants can be distinguished using the combination of B25 and B39 of the user information field. Here, EHT STA is judged only using B39, and non-legacy STA will be allocated only to SS160, so there may be no problem.

For example, a combination of 0 value of B25 and 0 value of B39 may indicate P160, which may indicate an EHT variant user information field. A combination of 0 value of B25 and 1 value of B39 may indicate S160, which may indicate an EHT variant user information field. A combination of 1 value of B25 and 1 value (or 0 value) of B39 may indicate SS160, which may indicate a non-legacy variant user information field. Alternatively, a combination of 1 value of B25 and 0 value of B39 may be reserved.

Alternatively, the following combinations may be used for integration with cases where HE TB PPDU is included. For example, 0/1 value of B25 and 0 value of B39 may indicate P160, which may indicate EHT variant user information field. 0 value of B25 and 1 value of B39 may indicate S160, which may indicate EHT variant user information field. A combination of 1 value of B25 and 1 value of B39 may indicate SS160, which may indicate non-legacy variant user information field.

Additionally, 480MHz of P160 + S320 can be considered in the case below where only P160 is EHT TB PPDU.

Next, to trigger/indicate P160 EHT TB PPDU + (S160 non-legacy TB PPDU) + S320/SS160 non-legacy TB PPDU, B54 of the non-legacy variant common information field may be set to 0 value, B55 may be set to 0 value, and the A-PPDU Flag subfield may be set to 0 value.

In this regard, 160MHz indication may be performed in the UL BW subfield within the non-legacy variant common information field and the UL BW extension subfield within the special user information field (or the non-legacy variant special user information field).

A-PPDU bandwidth and non-legacy TB PPDU bandwidth indication can be performed using the UL BW subfield in the non-legacy variant common information field and the UL BW extension subfield and additional BW subfield (if present) in the non-legacy variant special user information field. Here, it is also possible to perform indication for only one of the two.

Since B25 in the EHT variant user information field is a reserved bit, it is possible to use B25 and B39 in the user information field to indicate channel locations up to 640 MHz.

When considering up to 640MHz, the channel, PPDU, and user information field variants can be distinguished using the combination of B25 and B39 of the user information field. Here, EHT STA is judged only using B39, and non-legacy STA will be allocated only to S160 and S320, so there may be no problem.

For example, a combination of a 0 value of B25 and a 0 value of B39 may indicate P160, which may indicate an EHT variant user information field. A combination of a 0 value of B25 and a 1 value of B39 may indicate S160, which may indicate a non-legacy variant user information field. A combination of a 1 value of B25 and a 0 value of B39 may indicate 160 (or a lower 160 in S320) corresponding to a position of P160 in S320, which may indicate a non-legacy variant user information field. A combination of a 1 value of B25 and a 1 value of B39 may indicate 160 (or a higher 160 in S320) corresponding to a position of S160 in S320, which may indicate a non-legacy variant user information field.

If only up to 480MHz of P320 + SS160 are considered, the channel, PPDU, and user information field variants can be distinguished using the combination of B25 and B39 of the user information field. Here, EHT STA is determined only using B39, and non-legacy STA will be allocated only to S160, SS160, so there may be no problem.

For example, a combination of a 0 value of B25 and a 0 value of B39 may indicate P160, which may indicate an EHT variant user information field. A combination of a 0 value of B25 and a 1 value of B39 may indicate S160, which may indicate a non-legacy variant user information field. A combination of a 1 value of B25 and a 1 value (or a 0 value) of B39 may indicate SS160, which may indicate a non-legacy variant user information field. Alternatively, a combination of a 1 value of B25 and a 0 value of B39 may be reserved.

Alternatively, the following combinations may be used for integration with cases where HE TB PPDU is included. For example, 0/1 value of B25 and 0 value of B39 may indicate P160, which may indicate EHT variant user information field. 0 value of B25 and 1 value of B39 may indicate S160, which may indicate non-legacy variant user information field. A combination of 1 value of B25 and 1 value of B39 may indicate SS160, which may indicate non-legacy variant user information field.

If only up to 480MHz of P160 + S320 are considered, the channel, PPDU, and user information field variants can be distinguished using the combination of B25 and B39 of the user information field. Here, EHT STA is judged only using B39, and non-legacy STA will be allocated only to S320, so there may be no problem.

For example, a combination of a 0 value of B25 and a 0 value of B39 indicates P160, which may indicate an EHT variant user information field. A combination of a 0 value of B25 and a 1 value of B39 is reserved, and may indicate a non-legacy variant user information field. A combination of a 1 value of B25 and a 0 value of B39 indicates 160 (or a lower 160 in S320) corresponding to a position of P160 in S320, and may indicate a non-legacy variant user information field. A combination of a 1 value of B25 and a 1 value of B39 indicates 160 (or a higher 160 in S320) corresponding to a position of S160 in S320, and may indicate a non-legacy variant user information field.

Alternatively, the following combinations may be used for integration with cases where HE TB PPDU is included. For example, 0 / 1 value of B25 and 0 value of B39 may indicate P160, which may indicate an EHT variant user information field. 0 value of B25 and 1 value of B39 may indicate 160 (or lower 160 in S320) corresponding to the position of P160 in S320, which may indicate a non-legacy variant user information field. A combination of 1 value of B25 and 1 value of B39 may indicate 160 (or higher 160 in S320) corresponding to the position of S160 in S320, which may indicate a non-legacy variant user information field.

Next, to trigger/indicate P160 HE TB PPDU + S160 EHT TB PPDU + S320/SS160 non-legacy TB PPDU, B54 of the non-legacy variant common information field may be set to 1, B55 may be set to 0, and the A-PPDU Flag subfield may be set to 0.

In this regard, the UL BW subfield within the non-legacy variant common information field may indicate 160 MHz.

320MHz indication or EHT TB PPDU bandwidth (160MHz) indication may be performed in the UL BW subfield in the non-legacy variant common information field and the UL BW extension subfield in the special user information field (or the non-legacy variant special user information field).

A-PPDU bandwidth and non-legacy TB PPDU bandwidth indication can be performed using the UL BW subfield in the non-legacy variant common information field and the UL BW extension subfield and additional BW subfield (if present) in the non-legacy variant special user information field. Here, it is also possible to perform indication for only one of the two.

Additionally or alternatively, TB A-PPDU at 640MHz may not be possible. B25 in the HE Variant User Information field is used as a DCM field with values of 0/1, and B39 is used when it is 0. That is, channel indication using a combination of 1 value of B25 and 0 value of B39 is not possible.

If only 480MHz of P320 + SS160 is considered, the channel, PPDU, and user information field variants can be distinguished using the combination of B25 and B39 of the user information field. Here, EHT STA is judged only using B39, and non-legacy STA will be allocated only to SS160, so there may be no problem.

For example, a combination of 0/1 value of B25 and 0 value of B39 may indicate P160, which may indicate an HE variant user information field. A combination of 0 value of B25 and 1 value of B39 may indicate S160, which may indicate an EHT variant user information field. A combination of 1 value of B25 and 1 value of B39 may indicate SS160, which may indicate a non-legacy variant user information field.

Additionally, 480MHz of P160 + S320 may not be considered. The case may be the same as the P160 HE TB PPDU + S320 non-legacy TB PPDU case.

FIG. 10 is a flowchart illustrating a method for a first STA to transmit and receive a PPDU according to an embodiment of the present disclosure. In FIG. 10 and FIG. 11, each of the first STA and the second STA may be implemented as either a non-AP STA or an AP.

The first STA may receive a trigger frame including a UHR (ultra-high reliability) variant common information field from the second STA (S1010).

And, the first STA may transmit at least one TB PPDU to the second STA based on the trigger frame (S1020).

Here, the UHR variant common information field included in the trigger frame may include a HE/EHT P160 subfield (e.g., a field set in B54 of the common information field), an EHT variant special user information field flag subfield (e.g., a field set in B55 of the common information field), and a UHR variant special user information field flag subfield.

For example, based on the HE/EHT P160 subfield value being set to 0, the EHT variant special user information field flag subfield value being set to 1, and the UHR variant special user information field flag subfield value being set to 0, the format of at least one TB PPDU may be UHR TB PPDU.

For example, if the HE/EHT P160 subfield value is set to 1, the EHT variant special user information field flag subfield value is set to 0, and the UHR variant special user information field flag subfield value is set to 1, the format of the first TB PPDU in the primary 160 MHz among the at least one TB PPDU may be HE TB PPDU and the format of the second TB PPDU in the secondary 160 MHz may be EHT TB PPDU.

For example, if the HE/EHT P160 subfield value is set to 1, the EHT variant special user information field flag subfield value is set to 1, and the UHR variant special user information field flag subfield value is set to 0, the format of the first TB PPDU in primary 160 MHz among at least one TB PPDU be HE TB PPDU and the format of the second TB PPDU in secondary 160 MHz can be UHR TB PPDU.

As another example, if the HE/EHT P160 subfield value is set to 0, the EHT variant special user information field flag subfield value is set to 0, and the UHR variant special user information field flag subfield value is set to 0, the format of the first TB PPDU in the primary 160 MHz among at least one TB PPDU may be EHT TB PPDU and the format of the second TB PPDU in the secondary 160 MHz may be UHR TB PPDU.

The UHR variant common information field may further include a UHR P160 subfield. Here, based on the HE/EHT P160 subfield value being set to 1, the EHT variant special user information field flag subfield value being set to 1, the UHR P160 subfield value being set to 0, and the UHR variant special user information field flag subfield value being set to 0, the format of at least one TB PPDU may be a UHR TB PPDU.

For example, if the HE/EHT P160 subfield value is set to 1, the EHT variant special user information field flag subfield value is set to 1, the UHR P160 subfield value is set to 1, and the UHR variant special user information field flag subfield value is set to 0, the format of the first TB PPDU in the primary 160 MHz among at least one TB PPDU can be HE TB PPDU and the format of the second TB PPDU in the secondary 160 MHz can be UHR TB PPDU.

For example, if the HE/EHT P160 subfield value is set to 0, the EHT variant special user information field flag subfield value is set to 0, the UHR P160 subfield value is set to 1, and the UHR variant special user information field flag subfield value is set to 0, the format of the first TB PPDU in primary 160 MHz among at least one TB PPDU may be EHT TB PPDU and the format of the second TB PPDU in secondary 160 MHz may be UHR TB PPDU.

Additionally, the trigger frame may include a UHR special user information field containing information related to the UHR TB PPDU. The UHR variant common information field may include an A-PPDU flag subfield indicating whether at least one PPDU is an A-PPDU or an A-PPDU containing a UHR TB PPDU.

The method performed by the first STA described in the example of FIG. 10 may be performed by the first device (100) of FIG. 1. For example, one or more processors (102) of the first device (100) of FIG. 1 may receive a trigger frame including a UHR variant common information field from a second STA through one or more transceivers (106). The one or more processors (102) may transmit at least one TB PPDU to the second STA through one or more transceivers (106) based on the trigger frame.

Furthermore, one or more memories (104) of the first device (100) may store instructions for performing the method described in the example of FIG. 10 when executed by one or more processors (102).

FIG. 11 is a flowchart illustrating a method for a second STA to transmit and receive a PPDU according to one embodiment of the present disclosure.

The second STA may transmit a trigger frame including a UHR variant common information field to the first STA (S1110).

The second STA may receive at least one TB PPDU based on a trigger frame from the first STA (S1120).

Here, the configuration of the trigger frame transmitted by the second STA to the first STA has been described above, so any redundant description will be omitted.

The method performed by the second STA described in the example of FIG. 11 may be performed by the second device (200) of FIG. 1. For example, one or more processors (202) of the second device (200) of FIG. 10 may transmit a trigger frame including a UHR variant common information field to the first STA through one or more transceivers (206). The one or more processors (202) may receive at least a TB PPDU from the first STA through one or more transceivers (206) based on the trigger frame.

Furthermore, one or more memories (204) of the second device (200) may store instructions for performing the method described in the example of FIG. 10 when executed by one or more processors (202).

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

The method proposed in this disclosure has been described with a focus on examples applied to IEEE 802.11-based systems, but can be applied to various wireless LANs or wireless communication systems in addition to IEEE 802.11-based systems.

## Claims

1. A method performed by a first station (STA) in a wireless LAN system, the method comprising:
receiving a trigger frame including a UHR (ultra-high reliability) variant common information field from a second STA; and
transmitting at least one trigger-based (TB) physical layer protocol data unit (PPDU) to the second STA based on the trigger frame,
wherein the UHR variant common information field includes a HE(high efficiency)/EHT(extremely high throughput) P(primary)160 subfield, an EHT variant special user information field flag subfield and a UHR variant special user information field flag subfield, and
based on the HE/EHT P160 subfield value being set to 0, the EHT variant special user information field flag subfield value being set to 1 and the UHR variant special user information field flag subfield value being set to 0, a format of the at least one TB PPDU is a UHR TB PPDU.

2. The method of claim 1, wherein:
based on the HE/EHT P160 subfield value being set to 1, the EHT variant special user information field flag subfield value being set to 0, and the UHR variant special user information field flag subfield value being set to 1:
a format of a first TB PPDU in a primary 160 MHz among the at least one TB PPDU is HE TB PPDU and a format of a second TB PPDU in a secondary 160 MHz among the at least one TB PPDU is EHT TB PPDU.

3. The method of claim 1, wherein:
based on the HE/EHT P160 subfield value being set to 1, the EHT variant special user information field flag subfield value being set to 1, and the UHR variant special user information field flag subfield value being set to 0:
a format of a first TB PPDU in a primary 160 MHz among the at least one TB PPDU is HE TB PPDU and a format of a second TB PPDU in a secondary 160 MHz among the at least one TB PPDU is UHR TB PPDU.

4. The method of claim 1, wherein:
based on the HE/EHT P160 subfield value being set to 0, the EHT variant special user information field flag subfield value being set to 0, and the UHR variant special user information field flag subfield value being set to 0:
a format of a first TB PPDU in a primary 160 MHz among the at least one TB PPDU is EHT TB PPDU and a format of a second TB PPDU in a secondary 160 MHz among the at least one TB PPDU is UHR TB PPDU.

5. The method of claim 1, wherein:
the UHR variant common information field further includes a UHR P160 subfield, and
based on the HE/EHT P160 subfield value being set to 1, the EHT variant special user information field flag subfield value being set to 1, the UHR P160 subfield value being set to 0, and the UHR variant special user information field flag subfield value being set to 0: a format of the at least one TB PPDU is UHR TB PPDU.

6. The method of claim 5, wherein:
based on the HE/EHT P160 subfield value being set to 1, the EHT variant special user information field flag subfield value being set to 1, the UHR P160 subfield value being set to 1, and the UHR variant special user information field flag subfield value being set to 0: a format of a first TB PPDU in primary 160 MHz among the at least one TB PPDU is HE TB PPDU and a format of a second TB PPDU in secondary 160 MHz among the at least one TB PPDU is UHR TB PPDU.

7. The method of claim 5, wherein:
based on the HE/EHT P160 subfield value being set to 0, the EHT variant special user information field flag subfield value being set to 0, the UHR P160 subfield value being set to 1, and the UHR variant special user information field flag subfield value being set to 0: a format of a first TB PPDU in primary 160 MHz among the at least one TB PPDU is EHT TB PPDU and a format of a second TB PPDU in secondary 160 MHz among the at least one TB PPDU is UHR TB PPDU.

8. The method of claim 1, wherein:
the trigger frame includes a UHR special user information field, and the UHR special user information field includes information related to the UHR TB PPDU.

9. The method of claim 1, wherein:
the UHR variant common information field includes an A-PPDU flag subfield indicating whether the at least one PPDU is an A(aggregated)-PPDU or an A-PPDU including the UHR TB PPDU.

10. A first station (STA) performed in a wireless LAN system, the first STA comprising:
at least one transceiver; and
at least one processor connected to the at least one transceiver,
wherein the at least one processor is configured to:
receive, through the at least one transceiver, a trigger frame including a UHR (ultra-high reliability) variant common information field from a second STA; and
transmit, through the at least one transceiver, at least one trigger-based (TB) physical layer protocol data unit (PPDU) to the second STA based on the trigger frame,
wherein the UHR variant common information field includes a HE(high efficiency)/EHT(extremely high throughput) P(primary)160 subfield, an EHT variant special user information field flag subfield and a UHR variant special user information field flag subfield, and
based on the HE/EHT P160 subfield value being set to 0, the EHT variant special user information field flag subfield value being set to 1 and the UHR variant special user information field flag subfield value being set to 0, a format of the at least one TB PPDU is a UHR TB PPDU.

11. A method performed by a second station (STA) in a wireless LAN system, the method comprising:
transmitting a trigger frame including a UHR (ultra-high reliability) variant common information field to a first STA; and
receiving at least one trigger-based (TB) physical layer protocol data unit (PPDU) from the first STA based on the trigger frame,
wherein the UHR variant common information field includes a HE(high efficiency)/EHT(extremely high throughput) P(primary)160 subfield, an EHT variant special user information field flag subfield and a UHR variant special user information field flag subfield, and
based on the HE/EHT P160 subfield value being set to 0, the EHT variant special user information field flag subfield value being set to 1 and the UHR variant special user information field flag subfield value being set to 0, a format of the at least one TB PPDU is a UHR TB PPDU.

12. A second station (STA) performed in a wireless LAN system, the first STA comprising:
at least one transceiver; and
at least one processor connected to the at least one transceiver,
wherein the at least one processor is configured to:
transmit, through the at least one transceiver, a trigger frame including a UHR (ultra-high reliability) variant common information field to a first STA; and
receive, through the at least one transceiver, at least one trigger-based (TB) physical layer protocol data unit (PPDU) from the first STA based on the trigger frame,
wherein the UHR variant common information field includes a HE(high efficiency)/EHT(extremely high throughput) P(primary)160 subfield, an EHT variant special user information field flag subfield and a UHR variant special user information field flag subfield, and
based on the HE/EHT P160 subfield value being set to 0, the EHT variant special user information field flag subfield value being set to 1 and the UHR variant special user information field flag subfield value being set to 0, a format of the at least one TB PPDU is a UHR TB PPDU.

13. A processing device configured to control a first station (STA) in a wireless LAN system, the processing device comprising:
at least one processor; and
at least one computer memory operatively coupled to the at least one processor and storing instructions for performing operations upon being executed by the at least one processor;
the operations include:
receiving a trigger frame including a UHR (ultra-high reliability) variant common information field from a second STA; and
transmitting at least one trigger-based (TB) physical layer protocol data unit (PPDU) to the second STA based on the trigger frame,
wherein the UHR variant common information field includes a HE(high efficiency)/EHT(extremely high throughput) P(primary)160 subfield, an EHT variant special user information field flag subfield and a UHR variant special user information field flag subfield, and
based on the HE/EHT P160 subfield value being set to 0, the EHT variant special user information field flag subfield value being set to 1 and the UHR variant special user information field flag subfield value being set to 0, a format of the at least one TB PPDU is a UHR TB PPDU.

14. At least one non-transitory computer readable medium storing at least one instruction,
based on the at least one instruction being executed by at least one processor, an apparatus for performing communication in a wireless LAN system controls to:
receive a trigger frame including a UHR (ultra-high reliability) variant common information field from a second STA; and
transmit at least one trigger-based (TB) physical layer protocol data unit (PPDU) to the second STA based on the trigger frame,
wherein the UHR variant common information field includes a HE(high efficiency)/EHT(extremely high throughput) P(primary)160 subfield, an EHT variant special user information field flag subfield and a UHR variant special user information field flag subfield, and
based on the HE/EHT P160 subfield value being set to 0, the EHT variant special user information field flag subfield value being set to 1 and the UHR variant special user information field flag subfield value being set to 0, a format of the at least one TB PPDU is a UHR TB PPDU.
